# EUROPEAN PATENT APPLICATION

(11) **EP 1 136 648 A2**
(43) Date of publication of application: **26.09.2001**
(21) Application number: 01302701.6
(22) Date of filing: 23.03.2001
(51) Int. Cl.: E21B 7/28, G01V 1/104

(54) **Seismic shot-hole drill system**

(30) Priority: 24.03.2000 US 535651
(71) Applicant: WESTERN ATLAS INTERNATIONAL, INC., Houston, TX 77042-3115 (US)
(72) Inventor: Degner, Richard Alan, Houston, Texas 77005 (US)
(74) Representative: Vigars, Christopher Ian

(57) **Abstract**

A system for creating seismic exploration shot-holes. A slender shaft is formed into the soil and the lower end of the shaft is underreamed to generate a cavity. An explosive material is positioned within the cavity and is detonated to generate seismic source energy. The slender shot-hole reduces the drilling material excavated and substantially reduces the seismic source energy dissipated upwardly through the shot-hole. The explosive filled cavity can be spherical, conical, hemispherical, or other shapes to maximize the transfer of seismic source energy from the explosive material to the subsurface geologic formations. The invention significantly expedites shot-hole drilling and provides an improved system for coupling the explosive material energy to the geologic formations.

## Description

The present invention relates to the field of seismic exploration. More particularly, the invention relates to an improved seismic shot-hole system for deploying explosives to discharge seismic energy into subsurface geologic formations.

Geophysical seismic operations use vibrator machines or explosive charges to generate source signals in the form of shock waves to penetrate subsurface geologic formations. The shock waves are reflected from subsurface geologic structures and interfaces, and the reflected energy is detected with sensors such as geophones at the surface. Transducers reduce the reflected energy into signals which are recorded for processing.

In land-based geophysical seismic operations, vibrator trucks contact the soil to discharge energy into subsurface geologic formations. However, many survey regions comprise mountainous, tropical, or other regions inaccessible to seismic trucks. Because of accessability constraints and the large source energy provided by explosive materials, explosive charges detonated in shot-holes often provide a preferred source of seismic source energy. Shot holes approximately three and one-half to four inches in diameter are drilled in surface geologic formations. The shot-holes are typically ten to thirty meters deep, and explosive charges are placed in the bottom of the shot-hole. The explosive charges are detonated to generate the shock waves transmitted downwardly into subsurface geologic formations.

Seismic shot-holes require different parameters than excavation blast holes because the objective of shot-holes is not to displace or fracture rock, but to efficiently transfer elastic shock wave energy downwardly into subsurface geologic formations. Accordingly, the equipment and techniques for drilling shot-holes is relatively specialized. United States Patent No. 3,939,771 to McReynolds (1976) disclosed a seismic explosive charge loader and anchor. United States Patent No. 4,278,025 to McReynolds (1981) disclosed a seismic explosive charge loader having a spring anchor for retaining the charge in the borehole. United States Patent No. 4,546,703 to Thompson (1985) disclosed a device for placing an explosive charge into a borehole. United States Patent No. 4,660,634 to Johnson, Jr. (1987) disclosed an automatic drill pipe breakout especially suited for geophysical seismic drilling. United States Patent No. 5,281,775 to Gremillion (1994) disclosed a vibration hole forming device for shot-hole drilling from a lightweight drill.

The diameter of conventional explosive charges is smaller than the shot-hole diameter to facilitate placement of the explosives into the lower shot-hole end. The resulting annulus between the explosive charge and the shot-hole wall does not efficiently couple the shock wave energy to the subsurface geologic formations. Moreover, a large portion of the shock wave energy is discharged upwardly through the shot-hole because of the relatively low resistance provided by the open hole. To limit this energy loss, plugs are placed in the shot-hole as shown in United States Patent No. 4,066,125 to Bassani (1978). United States Patent No. 4,736,796 to Arnall et al.(1988) disclosed other techniques for sealing shot-holes with cement, gravel, and water swellable bentonite.

Large, regional seismic operations require multiple shot-hole locations for the survey. The drilling cost and effort required for each shot-hole is multiplied by the number of shot-holes. Additionally, efficient energy transmission from an explosive charge to the geologic formations can reduce the number of required shot holes, thereby increasing the efficiency of the seismic survey. Accordingly, a need exists for improved techniques for discharging seismic source energy into subsurface geologic formations.

The invention provides an apparatus and method for forming a seismic shot-hole in soil. The apparatus comprises a drill for creating a hollow, slender shaft of a selected diameter which extends downwardly in the soil, and a means for enlarging the lower end of the hollow shaft to generate a cavity having a diameter exceeding the shaft diameter. In different embodiments of the invention, the means can comprise a mechanical underreamer, an explosive charge, or other mechanism, and the cavity can have different shapes including spherical, hemispherical, or cylindrical shapes.

The method of the invention is practiced by positioning a drill at a selected location, by operating the drill to create the slender shaft, and by operating a means for generating the cavity at the shaft lower end. An explosive material can be positioned in the cavity and detonated to generate a seismic source signal, and the explosive material can be poured, tamped, connected with a bonding agent, or otherwise positioned in the cavity.

Figure 1 illustrates one form of a spherical cavity at the lower end of a slender shot-hole shaft.

Figure 2 illustrates a hemi-spherical cavity for containing explosive material.

Figure 3 illustrates a conical cavity for containing explosive material.

Figure 4 illustrates a bonding agent for engaging an explosive material to a cavity.

Figure 5 illustrates a rotary drill for forming a shaft and cavity.

Figure 6 illustrates a mechanical underreamer.

Figure 7 illustrates one shape for a cavity.

Figure 8 illustrates a kickoff for changing the direction of the drill shaft.

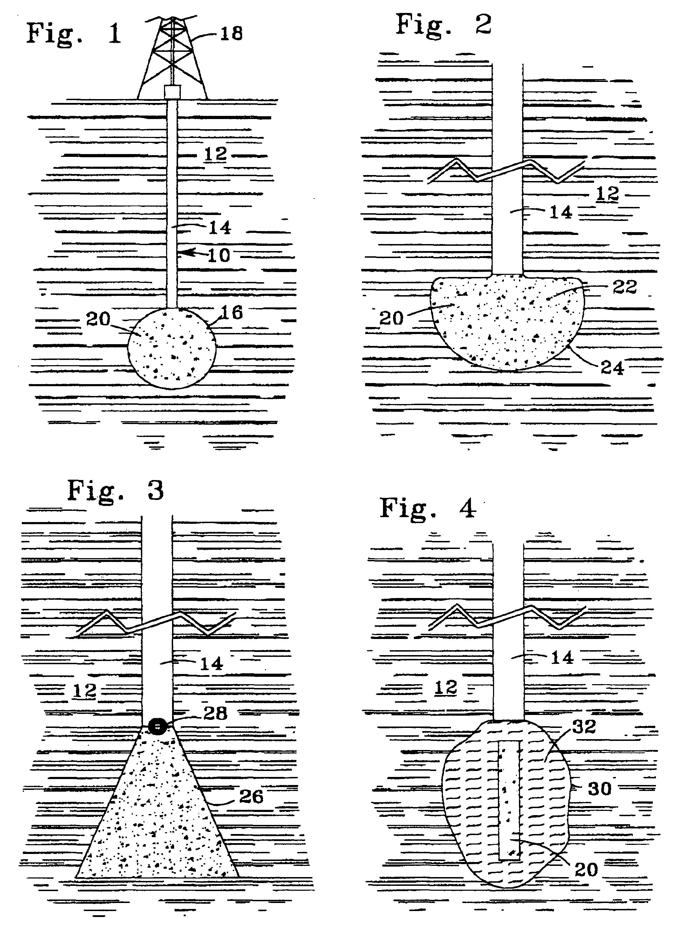

The invention provides an enhanced system for drilling seismic shot-holes and for coupling the seismic source energy between an explosive material and the subsurface geologic formations. Figure 1 illustrates an embodiment of the invention wherein shot-hole 10 is formed in soil 12. The term "soil," as defined herein, refers to all subsurface materials including unconsolidated organic or inorganic materials, clays, aggregates, and hard rock.

As illustrated, shot-hole 10 comprises a relatively slender, hollow shaft 14 and a cavity 16 having a diameter larger than the diameter of shaft 14. Shaft 14 can be one to one and one-half inches in diameter instead of conventional three and one-half to four inch diameter holes. By substantially reducing the diameter of shaft 14, less soil 12 must be removed to generate shot-hole 10, and the drilling rate is substantially increased. This feature of the invention substantially reduces drilling costs and saves time in the field during geophysical exploration operations. Smaller shaft 14 diameters also permits lighter drilling rigs, illustrated as rig 18, thereby increasing the mobility and accessibility of drilling operations.

Cavity 16 comprises an enlarged portion at the lower end of shaft 14, and provides the space for containing explosive material 20. Cavity 16 can be formed with different equipment and techniques, including mechanical underreamers, explosive charges, specialized drill bits, and other techniques. In one embodiment of the invention, cavity 16 can be formed by directing a drill bit into different paths at the lower end of shaft 14. After drilling along each path, rig 18 can raise the drill bit and resume drilling downwardly along a different path. Multiple passes of this technique can form an open space at the lower end of shaft 14, thereby forming cavity 16.

As shown in Figure 1, cavity 16 can be spherical in shape. Figure 2 illustrates another embodiment of the invention wherein cavity 22 is hemispherical in shape and has curved surface 24 facing downwardly into soil 12. These embodiments of the invention permit explosive material 20 to be coupled with soil 12 to transmit seismic source energy from explosive material 20 outwardly in a uniform manner. Other embodiments of the invention can form the cavity in a cylindrical, conical, irregular, or other shape suitable for containing explosive material 20.

In one embodiment of the invention, explosive material 20 can comprise a liquid phase when positioned within cavity 16 which later solidifies before explosive material is detonated. This embodiment of the invention provides direct contact between the surface wall of cavity 16 and explosive material 20. This direct contact increases the energy transfer between explosive material 20 and soil 12, thereby reducing the loss of seismic energy upwardly through shaft 14. The relatively narrow diameter of shaft 14 relative to the enlarged diameter of cavity 16 also constricts energy losses upwardly through shaft 14. This principle depends in part on the geometrical relationship that surface area increases exponentially as the hole diameter increases arithmetically in size. Accordingly, relatively small increases in the diameter of cavity 16 concentrates significantly more explosive power than possible within the confines defined by shaft 14 diameter. Narrowed shaft 14 will also impede energy losses exponentially less than if shaft 14 had a larger diameter substantially equal to or larger than the diameter of cavity 16. If desired, a conventional seal can be positioned within shaft 14 to further couple the energy transfer from explosive material 20 to soil 12.

Figure 3 illustrates a conical shaped cavity 26 for containing explosive material 20. Cutters for creating such a conical shape cavity 26 are conventionally used in drilling bellbottom piers in the construction industry. The conical shaped, downwardly enlarged shape filled with explosive material 20 provides a directive seismic source when initiated with detonator 28 located at the top of cavity 26. This shape operates to maximize the downwardly propagating energy and to minimize the upwardly and laterally propagating energy identified as "noise" on a reflection seismic profile.

Figure 4 illustrates another embodiment of the invention wherein explosive material 20 is positioned within cavity 30 and bonding agent 32 is positioned between explosive material 20 and soil 12. Bonding agent 30 can comprise any material which is liquid, semi-liquid, solid, particulate, or otherwise for engaging explosive material 20 with soil 12. Bonding agent 30 can initially comprise a phase which cures or chemically changes into another phase before explosive material 20 is detonated. Bonding agent 30 provides a vehicle for coupling energy transfer between explosive material 20 and soil 12, thereby increasing the efficiency of such energy transfer and reducing energy dissipation upwardly through shaft 14.

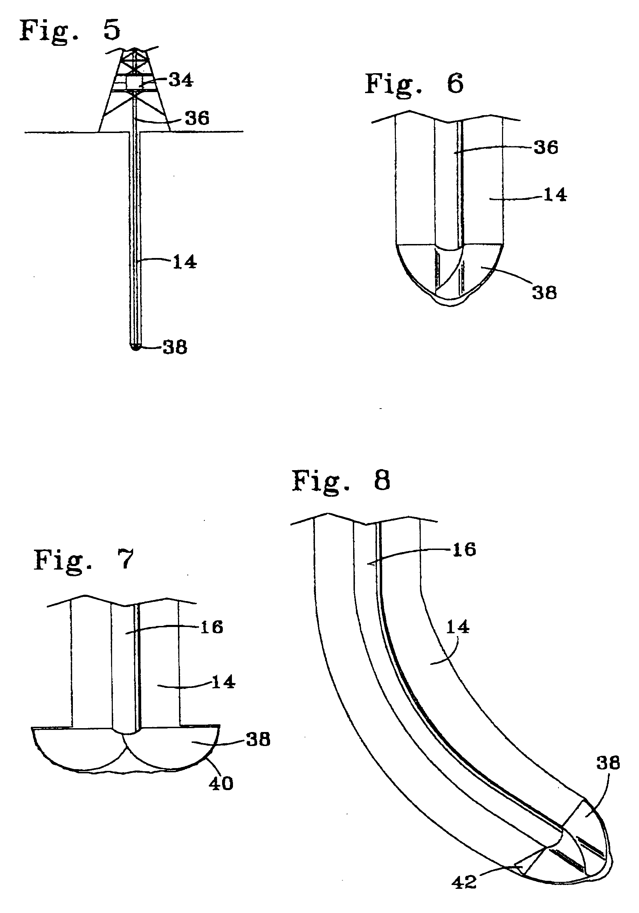

Figure 5 illustrates a rotary drill 34 suitable for creating shaft 14. Drill 34 has drill stem 36 attached to an excavation device such as cutter 38. Cutter 38 can be selectively rotated to generate shaft 14 generally cylindrical in shape. As shown in Figure 6, cutter 38 can comprise a mechanical underreamer which extends outwardly due to centrifugal force to increase the size of the shaft 14, and to generate a cavity such as cavity 16, 22, 26 or other desired shape. Figure 7 illustrates one embodiment of the invention wherein shaped cavity 40 is formed with mechanical underreamer 38. Figure 8 illustrates one embodiment of the invention wherein cutter 38 includes a mechanism such as kickoff 42 for changing the direction of shaft 14. Mechanical underreamer provides an excavation device extendible outwardly from drill stem 36 and can produce different shapes as identified above. In different embodiments of the invention, the cavity can be formed with nonmechanical devices such as water jets, compressed air delivered projectiles, explosive projectiles, or other known soil removal mechanisms.

The invention provides a unique technique for expediting shot-hole drilling, thereby reducing drilling costs and time and increasing the overall efficiency of seismic exploration operations. By increasing the coupling of seismic source energy transfer from the explosive material to the soil, less explosive is required to achieve a selected source wave, and potential damage to subsurface geologic formations is reduced. By increasing the diameter of the cavity, less energy is dissipated upwardly and the steps required to seal the borehole shaft can be minimized. The invention is particularly suited for reflection seismic source signals suitable for propagation into subsurface geologic formations. Variations in the shape and configuration of the shot hole and the explosive within the shot hole can be adapted to a selected application. For example, the explosive material can be hollowed at the lower end to create a shaped charge configuration suitable for focusing the explosive energy downwardly into the subsurface geologic formations. Although different techniques and equipment can be used in the formation of shaft 12 and cavity 16, the enlarged diameter of cavity 16 uniquely provides effective energy distribution at a minimal cost.

Although the invention has been described in terms of certain preferred embodiments, it will become apparent to those of ordinary skill in the art that modifications and improvements can be made to the inventive concepts herein without departing from the scope of the invention. The embodiments shown herein are merely illustrative of the inventive concepts and should not be interpreted as limiting the scope of the invention.

## Claims

1. An apparatus for forming a seismic shot-hole to retain explosive material in soil, comprising:
a drill for creating a hollow, slender shaft of a selected diameter extending downwardly into the soil; and
an excavation device for enlarging the lower end of said hollow shaft to generate a shot-hole cavity having a diameter exceeding said shaft diameter and having a shape selected to control the discharge of energy from explosive material retained within said shot-hole cavity, wherein said excavation device comprises a mechanical underreamer.

2. An apparatus for forming a seismic shot-hole to retain explosive material in soil, comprising:
a drill for creating a hollow, slender shaft of a selected diameter extending downwardly into the soil; and
an excavation device for enlarging the lower end of said hollow shaft to generate a shot-hole cavity having a diameter exceeding said shaft diameter and having a shape selected to control the discharge of energy from explosive material retained within said shot-hole cavity, wherein said excavation device comprises a mechanism for changing the shaft direction formed by said drill so said cavity is formed with multiple shafts initiated in different directions at the lower end of said slender shaft.

3. An apparatus as recited in Claim 2, wherein said drill comprises a rotary drill having a drill bit, and wherein said excavation device is extendible outwardly from said drill bit to generate said cavity.

4. An apparatus as recited in Claim 2, wherein said excavation device is capable of generating a substantially hemispherical cavity having a curved surface extending downwardly into the soil.

5. An apparatus as recited in Claim 2, wherein said excavation device is capable of generating a substantially cylindrical cavity.

6. An apparatus as recited in Claim 2, wherein said excavation device is capable of generating a substantially conical cavity having an apex located at the top of the cavity.

7. A method for forming a seismic shot-hole in soil, comprising the steps of:
positioning a drill at a selected location;
operating said drill to create a hollow, slender shaft of a selected diameter which extends downwardly to a selected depth in the soil; and
selecting the desired shape of a shot-hole cavity positionable at the lower end of said shaft;
operating an excavation device to generate said shot-hole cavity having said desired shape and a cavity wall diameter exceeding said shaft diameter;
placing an explosive charge in said cavity; and
detonating said explosive charge to generate a seismic source signal controlled by the selected shape of said cavity wall.

8. A method as recited in Claim 7, further comprising the step of hollowing said explosive charge to create a shaped charge configuration in said explosive charge.

9. A method for forming a seimsic shot-hole in soil, comprising the step of:
positioning a drill at a selected location;
operating said drill to create a hollow, slender shaft of a selected diameter which extends downwardly to a selected depth in the soil; and
operating an excavation device to generate a shot-hole cavity at the lower end of said shaft which has a cavity wall diameter exceeding said shaft diameter;
placing an explosive charge in said cavity; and
placing a bonding agent between said explosive charge and said cavity wall.

10. A method as recited in Claim 9, further comprising the step of detonating said explosive charge to generate a seismic source signal.

11. A method as recited in Claim 9, further comprising the step of operating said means to generate a substantially spherical cavity.

12. A method as recited in Claim 9, wherein operation of said cavity forming means comprises the step of detonating an explosive material to create said cavity
